# EUROPEAN PATENT APPLICATION

(11) **EP 1 315 071 A1**
(43) Date of publication of application: **28.05.2003**
(21) Application number: 01309946.0
(22) Date of filing: 27.11.2001
(51) Int. Cl.: G06F 3/00, G06F 3/033

(54) **User interface**

(71) Applicant: BRITISH TELECOMMUNICATIONS public limited company, London EC1A 7AJ (GB)
(72) Inventor: Patel, Dipak, Dock Street, Ipswich, Suffolk, IP2 8EN (GB)
(74) Representative: Lidbetter, Timothy Guy Edwin

(57) **Abstract**

A work surface 1 is disposed in a horizontal plane to function as a desk or conference table, and incorporates a visual display device 10 controlled by a computer 9. The surface of the display device 10 includes a movement sensor 12 monitoring the area above the display device, or touch-sensitive devices in the work surface 1 itself. An audio system 80, 81, 82, provides speech recognition facilities to identify comands uttered by the users, voice recognition to identify individual speakers, and spatialisation so that the system can identify the approximate location of each individual user in relation to the work surface. This allows the computer 9 to allocate part of the workspace 1 and of the associated display 10 to each user present. The display may therefore be arranged to present a number of display areas appropriate to the number of users currently present, and their relative positions relative to the work surface 1.

## Description

This invention relates to interfaces between users and communications or computing systems, and in particular to an interface capable of use by several users simultaneously.

It is difficult for several users to co-operate in the use of a conventional interface device, as it typically has a single keyboard, monitor screen etc designed for use by one individual. Typically, therefore, each user requires his or her own terminal, communicating with each other through a data server. This makes normal person-to -person interactions difficult - for example a user cannot simply point to something in the display.

According to the invention there is provided a user interface capable of use by several people simultaneously, comprising a an interactive display device having means to display a workspace and means for detecting and responding to the input activities of a plurality of users. Preferably the display device may be arranged as a horizontal table, so that users may dispose themselves around it. Each user's input activities may be controlled by a separate input device such as a keyboard, mouse or voice activated system. However, in a preferred embodiment the display device is touch-sensitive, and users may provide input commands by touching regions of the screen, or by placing objects on it.

The display device may be provided with means to move part or all of the display, so that the position or orientation of a displayed item can be changed to allow different users standing or seated around the device to view the item. The screen itself could be moved, but preferably control means are provided to manipulate the image to provide the same effect, and to allow independent movement of different parts of the image.

In a preferred arrangement the display may be divided into a plurality of portions, according to the number of users requiring to use it. The portions may each display duplicate copies of the same image, which may be amendable by one or more of the users.

The number of users requiring to use the display, and therefore the number of portions required, may be identified by any suitable command, input to the computer using the touch-sensitive screen or other input device. Where audio input means are provided, it may be used to provide an interactive audio system for automatically allocating a portion of the display to each of a plurality of users present, the audio system comprising a series of directional microphones to detect the positions of sound sources in the region surrounding the display, and means to allocate to each sound source a portion of the display appropriate to its position. Voice recognition means may be used to identify the sound sources and allocate access rights accordingly.

Embodiments of the invention will now be described, by way of example only, with reference to the drawings, in which:
Figure 1 shows the general arrangement of a display device according to the invention
Figures 2, 3, 4 and 5 show the display device of Figure 1 in plan view, arranged for use by one, two, three, and three users respectively - Figures 4 and 5 differing in that the three users are in different positions.
Fitgure 6 shows a plan view of a second embodiment of the invention

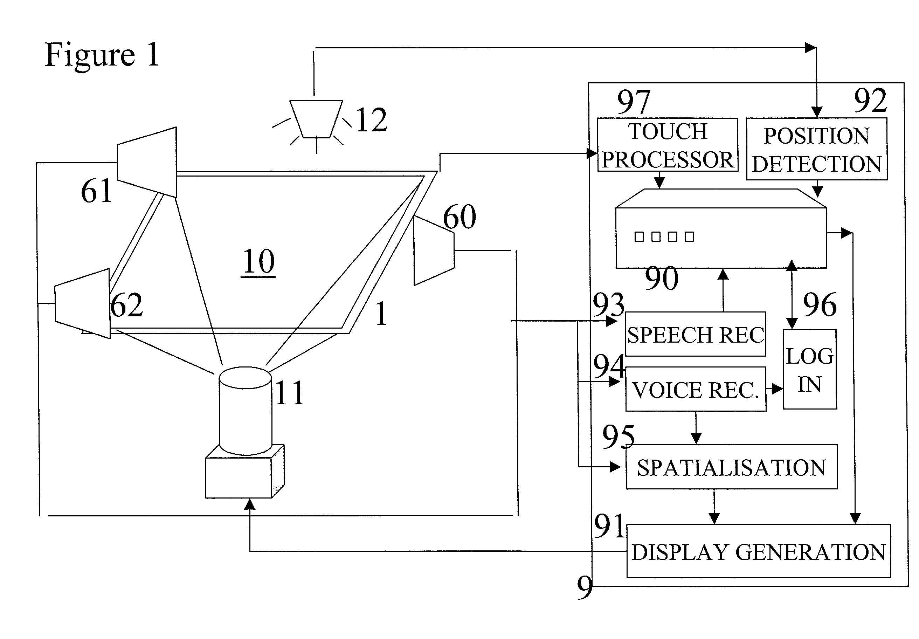

As shown in Figure 1, a work surface 1 disposed in a horizontal plane, which may function as a desk or conference table, incorporates a visual display device 10 arranged as a large screen, and controlled by a computer 9, having a central processor 90 interacting with a number of subsystems 91,92,93,94,95,96 which will be described later. The visual display device 10 may be of any type suitable for a display of a size appropriate to this use, such as a cathode ray tube, a plasma screen, a solid state device, a liquid crystal display, or an array of such devices. However, in the embodiment shown in Figure 1 the display is provided by back-projection of an image onto the underside (reverse side) of the screen 10 using a projector 11. This has the advantage that the complex image production equipment (the projector 11) can be isolated from potential damage caused by objects dropped or spilled onto the work surface 1. It is also relatively simple for the screen 10 to be folded, or even rolled up, for storage or transport. The folded screen 10 with the projector 11, forms a relatively small and lightweight package compared to a large array of individual cathode ray displays or LCDs.

A large display area can therefore be created using a standard projector 11 to display a image of a workspace, generated by a graphical display system 91 of a computer 9. The surface of the display device 10 can be made interactive by adding detection means 12 for detecting the users' hand movements, or objects placed on the work surface 1, and sending inputs to a position detection system 92 of the workspace computer 9 e.g. to move a mouse pointer on the display 10. The detection means may be a movement sensor 12 monitoring the area above the display device connected to a movement processor 92, or touch-sensitive devices in the work surface 1 itself, connected to a procesor 97.

The work surface 1 is also provided with an audio system comprising embedded microphones 80, 81, 82, connected to the computer 9. The computer has three audio subsystems 93, 94, 95. Firstly there is a speech recognition processor 93, capable of identifying the words uttered by the speakers, provided to allow the computer 9 to respond to spoken commands. Secondly, there is a voice recognition processor 94, capable of identifying individual speakers. Finally, there is a spatialisation processor 95, provided so that the system can identify the spatial location of each sound source.

The audio system 80, 81, 82, 93, 94, 95 serves several purposes. The first purpose is to receive spoken commands from the users, using the speech recognition system 93, for controlling commands in the central processor 90. The second purpose is to identify individual users using the voice recognition system 94. The users' speech signatures are recognised by a login security processor 96 in the computer 9 and used to authenticate their identities to the computer 9 The third purpose is to detect the presence and approximate location of each individual user in relation to the work surface using the information from the spatialistaion processor 95, and to control the display processor to allocate part of the workspace 1 and of the associated display 10 to each user accordingly.

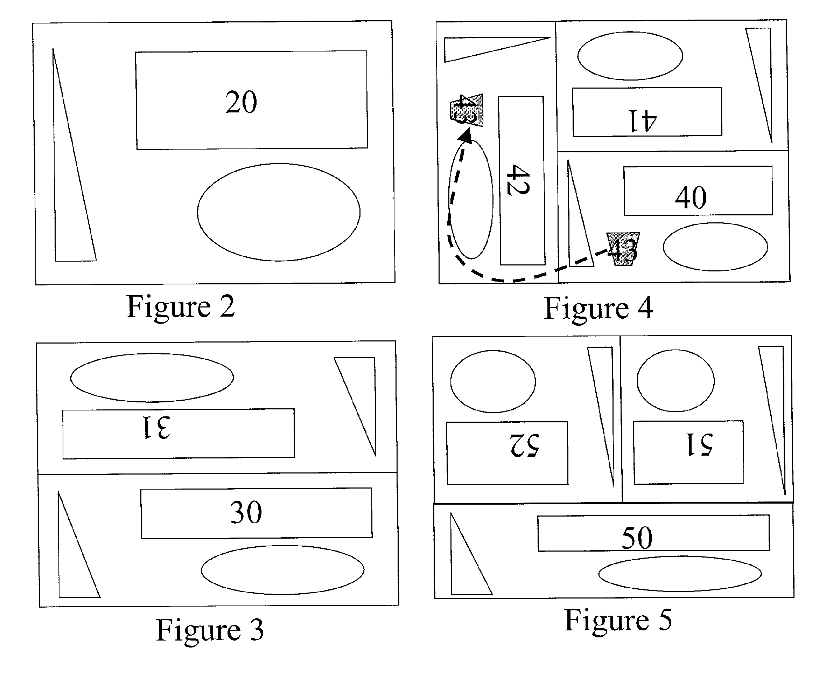

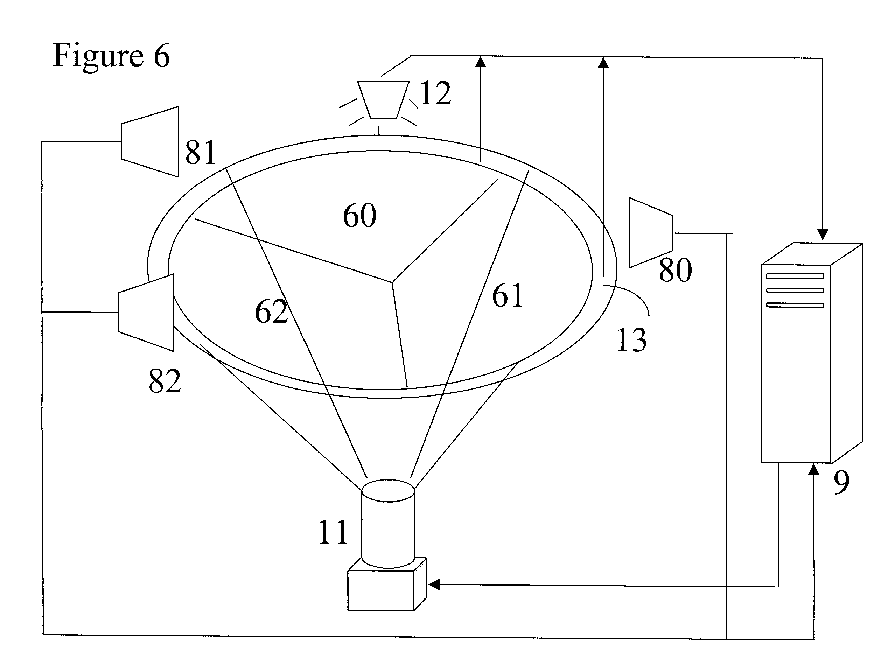

As shown in Figures 2, 3, 4 and 5, the display may be arranged to present one or more display areas 20, 30, 31, 40, 41, 42, 50, 51, 52 according to the number of users present and their relative positions relative to the work surface 1, (as indicated by the orientation of the reference numerals). It will be seen that in Figure 4 two of the user displays 40, 41 are arranged for users facing each other across the rectangular table 1, with the third display 42 arranged for a user at one end of the table. In Figure 5, two of the displays 51, 52 are arranged for users disposed on one side of the table, facing the user of the third display 50.

The method of use of this embodiment will now be described.

To initiate a work session a user approaches the workspace 1 and issues a verbal command. The spatialistaion system 95 of the work surface computer 9 calculates the position of the user by using the audio levels registered by each microphone 80, 81, 82. For example, if the user is standing equidistant between two microphones 80, 81, those two microphones will read equal audio levels. The work surface computer 9 then determines, from the position calculated, what display 20 should be projected by the projector 11, and in particular its orientation. If a second user arrives at the work surface the same positioning process is repeated, the main display is copied and the work surface computer 9 generates a duplicate user interface display element 31. This element 31 is placed in a virtual partition of the work area display 10, the original element being replaced by a smaller element 30. Each user has his own autonomous control over the working document displayed in each element 30, 31. If one user changes the document, it is updated in each partition. If a third user is added to the system, the existing display elements 30, 31 are replaced by smaller elements 40, 41 (or 50, 51), and copied to generate a further identical element 42 (or 52) for the use of the new arrival. This process may be continued indefinitely (or reversed if users leave the workspace) until a practical limit is reached. For large numbers of users two or more of them may share the same display element, the existing element allocated to each new user being determined according to that user's posituion as determined by the spatialistaion system.

As shown on Figure 4, an object 43 displayed on the work surface may be dragged from one user 40 to another user 42 by suitable commands, using spoken instructions or by opeartion of an input device such as a computer mouse. The orientation of the displayed object 53 may, if appropriate, be rotated as it moves from one display area 40 to another 42 having a different orientation.

The embodiment of Figure 6 is similar in most respects to that of Figure 1, and features common to the two embodiments will not be described in detail again. In particular, the computer 9, although not shown in detail, is generally arranged similarly to that of Figure 1.

In the embodiment of Figure 6 the work surface 1 is circular, and is surrounded by a ring 13 mounted for rotation on bearings. Each user is allocated a sector 60, 61, 62, of the circular display surface 10, the angular extent of which depends on the number of users present. The ring 13 is provided with motion transducers acting as an input device to the computer 9, controlling the display generation system 91 such that, ifthe ring 13 is rotated by one of the users, each user's viewpoint is moved around to the next user's virtual partition on the work surface. The transducers may take any suitable form. The speed, direction and length of movement are synchronised with the projected image, so that as a user rotates the ring, the virtual display moves as well. This is suited to an application where one user is viewing a document and wants to pass it along to other users around the table. A static 'virtual' ring using pressure sensors could replace the physical ring 13.

## Claims

1. A user interface capable of use by several people simultaneously, comprising an interactive display device having means to display a workspace and means for detecting and responding to the input activities of a plurality of users.

2. A user interface according to claim 1 wherein the display device comprises a foldable horizontal display surface.

3. A user interface according to claim 1 or 2 comprising an input system arranged for control of the system by a plurality of users

4. A user interface according to claim 3, comprising meaans for dividing the display into a plurality of portions, according to the number of users who are to use it.

5. A user interface according to claim 4, comprising an interactive audio system for allocating a portion of the display to each of a plurality of users, the interactive ausion system comprising a plurality of directional microphones to detect the positions of sound sources in the region surrounding the display, and means to allocate to each sound source a portion of the display appropriate to its position.

6. A user interface according to claim 3, 4 or 5, wherein the input system comprises a voice activated system.

7. A user interface according to claim 6, comprising voice recognition means for identification of individual users and allocation of access rights accordingly, and speech rcognition means to respond to spoken commands.

8. A user interface according to any preceding claim, wherein the display device is touch-sensitive, and having means to provide input commands by detecting regions of the screen which are boing touched or have objects placed on them.

9. A user interface according to any preceding claim, comprising means to move part or all of the display, to change the position or orientation of a displayed item.

10. A user interface according to claim 8, comprising control means to manipulate the display without physical movement of the display device.

11. A user interface according to any preceding claim, wherein the display device comprises an optical projector.
